# EUROPEAN PATENT APPLICATION

(11) **EP 0 553 516 A1**
(43) Date of publication of application: **04.08.1993**
(21) Application number: 92204085.2
(22) Date of filing: 28.12.1992
(51) Int. Cl.: B60G 9/02, B60K 17/32

(54) **A sprung axle assembly for a vehicle**

(30) Priority: 29.01.1992 IT PD920010
(71) Applicant: CARRARO S.P.A., I-35011 Campodarsego (Padova) (IT)
(72) Inventor: Massaccesi, Gianni, I-35010 Vigodarzere (Padova) (IT); Raniero, Antonietto, I-35010 S. Andrea Vigonza (Padova) (IT); Visentini, Ivano, I-30036 Caltana S. Maria di Sala (IT)
(74) Representative: Cantaluppi, Stefano

(57) **Abstract**

A sprung axle assembly is disclosed which comprises a rigid beam axle 6 provided with a pivot support 2 for mounting the axle on a load-carrying structure A of a vehicle in a swinging fashion about a first axis X, wherein the axle is mounted for further oscillation about a second axis Z perpendicular to the first on the load-bearing structure through a second pivot means (15a,b; 16a,b). Springing 26 is arranged to act between the axle 6 and the load-bearing structure A to restrict the axle oscillation about the second axis Z.

## Description

This invention relates to an axle assembly for a vehicle, being of a type which comprises a rigid beam axle provided with a pivot support for mounting the axle on a load-bearing structure of the vehicle for oscillation about a first axis.

Axle assemblies with the above features are widely employed on some vehicle types, such as agricultural tractors.

These axle assemblies comprise a rigid beam axle swingably mounted on the load-bearing structure of the vehicle about a perpendicular axis to the beam axis.

Axle assemblies with this construction usually have no springing system.

Sprung axle structures for agricultural tractors are known, however, from German Patents No. 3834693, No. 3901757 and No. 3937938.

These sprung axle designs have a drawback, however, in that they require special adaptation of the vehicle load-bearing structure, compared to other vehicles mounting no sprung axles.

For instance, the axle assembly shown in German Patent No. 3834693 requires a specially rugged swivel joint of the ball-and-socket type placed on the underside portion of the tractor load-bearing structure, and special arrangements on the tractor for attachment of a rocker-arm structure through which the axle and its suspension can be linked to each other and to said load-bearing structure.

The underlying problem of this invention is to provide a sprung axle assembly which can contain all of the elements required to assemble it to the load-bearing structure of a vehicle without involving any substantial alteration of the structure.

This problem is solved according to the invention by an axle assembly as indicated in the preamble being characterized in that said axle is mounted on said load-bearing structure for further oscillation about a second axis perpendicular to the first using a second pivot means and that springing is arranged to act between said axle and load-bearing structure to restrict the axle oscillation about the second axis.

The features and advantages of the invention will be better understood from the following detailed description of a preferred embodiment thereof, shown by way of example and not of limitation in the accompanying drawings, wherein:
Figure 1 is a cross-sectional view showing schematically a sprung axle assembly according to this invention; and

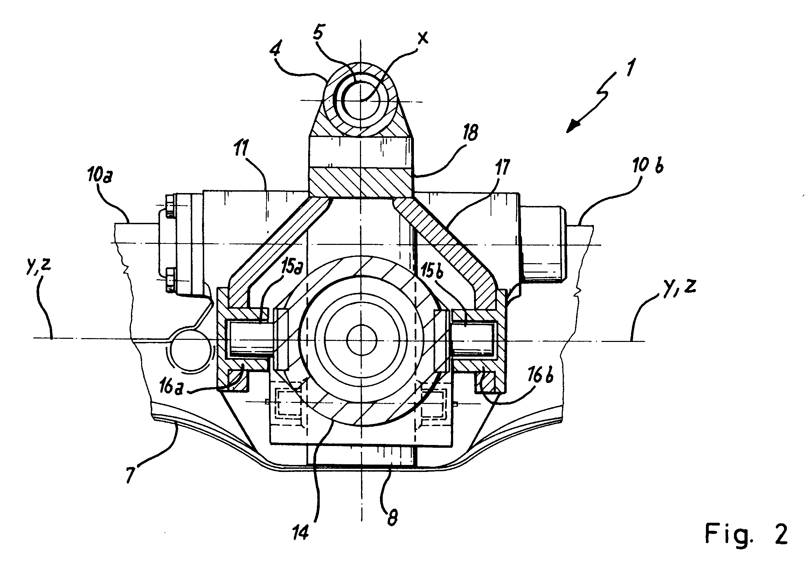

Figure 2 is a sectional view taken along line II-II in Figure 1.

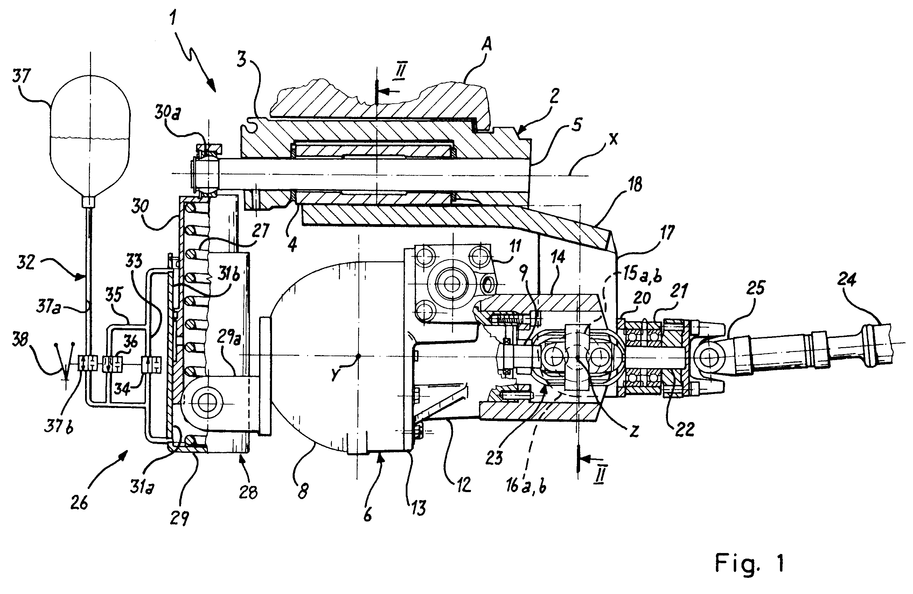

Partly shown in Figure 1 is a vehicle, which may be an agricultural tractor for example, having a load-bearing structure A and being equipped with a front axle assembly 1 embodying this invention.

The axle assembly 1 is articulated so as to swing relative to the structure A by the provision of a pivot attachment 2 having an axis X and including a first pivot member 3 belonging to structure A, or somehow made fast therewith, and a second pivot member 4, said pivot members being interconnected pivotally by a spindle 5.

The axle assembly 1 comprises a steering drive axle, indicated at 6, being of the rigid, box-type beam 7 type. The beam 7 has an intermediate portion 8, at whose location a differential mechanism is accommodated, of which in Figure 1 are shown a drive input shaft 9 and two juxtaposed end portions 10a,b aligned along the same axis Y, referred to as the beam axis hereinafter on whose free end a respective wheel, not shown, is mounted. For steering such wheels, the axle 6 is provided with a steering jack 11. The differential mechanism is supported on a bell-shaped part 12 of the axle 6, being of a conventional design, which is connected through a respective flange 13 to the box-type structure of the beam 7. Attached to the bell-shaped part 12 is a collar 14 carrying on its exterior two cylindrical, coaxial pivot formations 15a,b. such pivot formations 15a,b are engaged in respective bushes 16a,b made fast with a frame structure 17, which is in turn fast with the second member 4 of the first pivot 2 through an arm 18. The bushes 16a,b and respective pivot formations 15a,b form the elements of a second pivot which has an axis Z perpendicular to the axis x of pivot 2, through which the axle 2 is mounted in a further swung fashion on the load-bearing structure A of the vehicle.

Attached to a plate 20 of the frame structure 17 is a bearing carrier 21 for a shaft 22 which is coupled to the shaft 9 of the differential mechanism via an equal-velocity joint 23 and also coupled to a drive shaft 24 via a universal joint 25. The combination of shaft 22 and respective carrier 21 and joint 23, and collar 14 form a retrofit kit for an otherwise conventional axle structure vis-à-vis application thereof in the context of this invention. This feature enables the use in the axle assembly 1 construction of axles of the same kind as those employed with rigid axle assemblies.

It should be noted that Joint 23 is located substantially centered on axis Z.

The oscillation of axle 2 about axis Z is controlled by a springing suspension 26 arranged between the beam 7 and the spindle 5 of the first pivot 2.

The springing suspension 26 comprises a spring 27 and a shock absorber 28 having a cylinder 29 and a piston 30 urged mutually apart by said spring. The cylinder 29 is swing-mounted to the beam 7 through a bracket 29a; the piston 30 is, in turn, swing-mounted on the free end of pivot 5 through a ball-and-socket joint 30a.

The cylinder and piston 29, 30 jointly define two chambers 31a,b put in mutual fluid communication by a hydraulic circuit shown schematically in the drawing figure and generally indicated at 32.

The circuit 32 comprises a first conduit 33 selectively shut off by a first one-way valve 34 which is set to allow a fast flow of oil front chamber 31a into chamber 31b when the shock absorber 28 undergoes a sudden compression. A second conduit 35 is laid to bypass the valve 34, in parallel with conduit 33. This conduit 35 is selectively shut off by a second one-way valve 36 set to allow of an oppositely directed flow from that of valve 34, from chamber 31a to chamber 31b, at reduced flow rates to slow down the extension stroke of the shock absorber. Further, both conduits 33, 35 are communicated to a storage tank 37 through a third conduit 37a selectively shut off by a valve 37b.

It should be noted that the valves 34, 36 and 37b can be all locked in a shut-off position in the corresponding conduit by means of a control schematically shown at 38. With the valves locked, the springing 26 behaves as a rigid strut to cause the axle assembly of this invention to perform similar to a conventional rigid axle assembly.

With the valves in the open state, the axle assembly 1 will instead combine its capability to swing about axis X of pivot 2, as is also common with conventional rigid axle assemblies, with a capability to swing in a controlled fashion by the springing 26 about axis Z. Notice that all the elements required for the installation and operation of the axle assembly are integrated to it, and the same can be installed on an agricultural tractor or another vehicle having a conventional load-bearing structure without requiring any substantial adaptation work.

Included among the advantages of this invention is also that it allows the use of axles having standard production features, to thus achieve improved standardization of the component parts used.

## Claims

1. An axle assembly for a vehicle, comprising a rigid beam axle 6 provided with a pivot support for mounting the axle on a load-bearing structure A of the vehicle for oscillation about a first axis X, characterized in that said axle 6 is mounted on said load-bearing structure A for further oscillation about a second axis Z perpendicular to the first (X), one of said first and second axes (X,Z) lying parallel to and spaced apart from the axis of said beam (Y), and that springing 26 is arranged to act between said axle and load-bearing structure A to restrict the axle oscillation about the second axis Z.

2. An axle assembly according to Claim 1, wherein a first pivot means 2 is provided between the support and the load-bearing structure A, with said first axis X extending along a substantially transverse direction to the axis of said beam Y, and wherein a second pivot means (15a,b; 16a,b) is provided between the support 17,18 and the axle 6.

3. An axle assembly according to claim 2, wherein the first pivot means comprises a spindle 5, and said springing 26 is active between the beam 6 and said spindle 5.

4. An axle assembly according to either claim 2 or 3, wherein the pivot support comprises a frame structure (17,18) interlinking respective pivot members (4; 16a,b) of the first and second pivot means.

5. An axle assembly according to one of the preceding claims, wherein said springing includes a selectively lockable shock absorber 28.

6. An axle assembly according to one of claims 2 to 5, wherein at least one of the pivot members of said second pivot means is formed on an accessory element 14 removably attached to the beam 6 of said axle.

7. An axle assembly according to claim 6 as dependent on Claim 4, wherein said accessory element comprises a sleeve formation 14 carrying on its exterior two juxtaposed pivot formations 15a,b adapted to be received in respective bush formations 16a,b carried on said frame structure, and wherein said frame structure carries a support 20,21 for a shaft 22 coupled to a drive input shaft 9 of a differential mechanism of said axle 6 in continuation thereof.

8. An axle assembly according to Claim 7, wherein fitted between said shafts is an equal-velocity joint 23.
